# EUROPEAN PATENT APPLICATION

(11) **EP 1 357 527 A2**
(43) Date of publication of application: **29.10.2003**
(21) Application number: 03008798.5
(22) Date of filing: 23.04.2003
(51) Int. Cl.: G07F 19/00

(54) **A payee account payment system**

(30) Priority: 26.04.2002 US 133984
(71) Applicant: BLACKSTONE CORPORATION, Miami, Florida 33178-1834 (US)
(72) Inventor: Arias, Luis A., Miami, Florida 33178 (US)
(74) Representative: Wagner, Karl H., Dipl.-Ing.

(57) **Abstract**

A payee account payment system to be used by a user having a number of payee accounts in connection with which payments must be made, the system including a transaction terminal with an operator interface that communicates information to an operator and receives information in connection with the user. The system further includes a plurality of user accounts and a user account identifier structured to identify a specific user account. The transaction terminal is structured to receive the user account identifier and to identify the user account, which is associated with the payee accounts, and to subsequently receive a payment authorization in connection with the payee accounts. A primary processor is included and is communicatively associated with the transaction terminal so as to receive the payment authorization and direct payment to the payee account in accordance therewith.

## Description

### BACKGROUND OF THE INVENTION

### Field of the Invention

The present invention relates to a payee account payment system which is structured to greatly facilitate the ability of a user to pay balances on one or more accounts held by them, from a single and convenient location, utilizing any of a variety of payment means. Furthermore, the account payment system is structured to provide value added services to the user, as well as function as a conventional transaction terminal for a merchant and/or operator of the account payment system, thereby providing a substantial incentive towards availability and utilization, and avoiding the need for specialized account affiliations and/or dedicated payment methods at the operator/merchant level.

### DESCRIPTION OF THE RELATED ART

Most individuals are accustomed to having a number of payee accounts which must be paid on a regular basis, such as monthly. These payee accounts may include a telephone account, electricity/utility account, rent, home mortgage, automobile loan payment, and/or a plurality of different credit card accounts. As a result, such users are typically burdened with the task of making several payments, to all the user accounts, on a regular basis.

The typical payment method employed by most consumers involves the writing of a check and/or the purchase of a money order to be mailed to the corresponding payee in satisfaction of an appropriate amount owed. Unfortunately, however, as it evident from the wide spread use of the money order system, many individuals may not have appropriate checking accounts and/or bank accounts which they can utilized to easily pay such payee bills, and are thereby forced to pay the often high transaction cost associated with obtaining and forwarding a money order. Additionally, these traditional paper payment methods require that the user subsequently send, via mail, the corresponding negotiable document to the payee for accreditation to their account. In addition to the inconvenience and expense associated with having to mail out a large number of payments to a variety of different payees, there is also the risk that the payment will become lost or stolen, and there is a substantial time delay that may occur as a result of the normal mailing process and/or a potential loss of the mail. As a result, it would be highly beneficial to have a payee account payment system which can be effectively utilized by any consumer, does not require specialized payment methods and does require the physical forwarding of a payment to the payee via conventional mail.

In view of the preceding drawbacks associated with standard payment methods, it is recognized that in some instances certain specific payees may make prior arrangements with certain establishments so as to allow consumers to visit those specific establishments and thereby make the appropriate payment. Unfortunately, however, such relationships are generally limited and require specialized relationships between the merchant itself and the payee, and as a result are generally impractical and not available unless it is a large, established and wide spread merchant chain. As a result, a consumer is still left with a limited number of locations to which a specific payment can be made, and often the payment modes are rather limited, and most merchants are not able to offer the service to their consumers.

In addition to the preceding, it is also recognized that with the recent advances in the Internet many banks have begun to offer online banking options whereby accounts can be managed and payments can be made via the online banking system. Unfortunately, however, such system still require the users to maintain an account with that specific bank, a relationship which may or may not be possible and/or practical, and requires that the user have computer facilities to allow them to establish this online access. Furthermore, it is recognized that there is often a regular charge associated with the use of such online banking systems, and consumers most have a general understanding of computers and their operation.

Accordingly, it is recognized that it would beneficial to have a payee account payment system which is embodied in a manner which allows a variety of different merchants, both small and large to utilized the system and facilitate the payment process by the consumer. Furthermore, such a payee account payment system should be readily accessible and usable by all consumers, not requiring specialized Internet access and/or computer skills on behalf of that individual consumer. Also, such a system should be available to consumers at a wide variety of locations, both local to their residence as well as at remote locations. Indeed, it is seem that this is one substantial drawback that is associated with existing, conventional payment systems in that a consumer who is traveling and/or is at another location may often have difficulty in accomplishing the necessary payments. For example, the consumer who may have their residence in one specific city and/or one specific country may be traveling and/or living for an extended period of time in another location, while still maintaining their primary residence. Under existing systems that customer is often required to maintain special accounts in the corresponding city and/or country as many merchants will not accept payments from foreign banks. Also, if the person is traveling from location to location, it may be difficult for them to find the necessary facility to make their payments and forward their payments onto a distant merchant in a timely manner. As a result, it would be beneficial to provide a payee account payment system which can have an international impact and which can be effectively utilized at any of a variety of locations so as to achieve the necessary payments in an efficient and timely manner. Moreover, such a system should encourage widespread participation by a large number and variety of merchants, and should be acceptable to all types of users, including those who do not have bank accounts and cannot afford computers or internet access.

### SUMMARY OF THE INVENTION

The present invention is directed towards a payee account payment system. In particular, the payee account payment system is preferably configured for use by a user having at least two, but often more payee accounts in connections with which payment must be made by that user. Moreover, the payee account payment system includes a transactional terminal which may be located at any of a variety of different merchants. The transaction terminal may include an operator interface and is structured to communicate information at least to an operator of the terminal and to receive information in connection with the user.

In addition to the transactional terminal, the payee account payment system preferably includes a user account and moreover a plurality of user accounts each associated with one of a plurality of different users that may ultimately utilize the present payee account payment system. As such, the present system designates the user account identifier is provided and is structured to identify a specific one of the user accounts. The transaction terminal preferably receives that user account identifier and thereby functions to identify the user account, either independently or in association with a remote processor.

Each user account is preferably associated with the payee accounts of the particular user. Moreover, the transaction terminal is structured to receive a payment authorization in connection with at least one of the payee accounts associated with an identifier user account. Naturally, the payment authorization is generated in connection with a particular payment made by the user. Furthermore, a primary processor that is communicatively associated with the transaction terminal is responsive to the payment authorization and is structured to direct payment to the payee account in accordance with the payment authorization. As a result, the user is able to effectively make payments to one or more of their payee accounts by providing an appropriate payment to an operator of the transaction terminal.

These and other features and advantages of the present invention will become more clear when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawing in which:

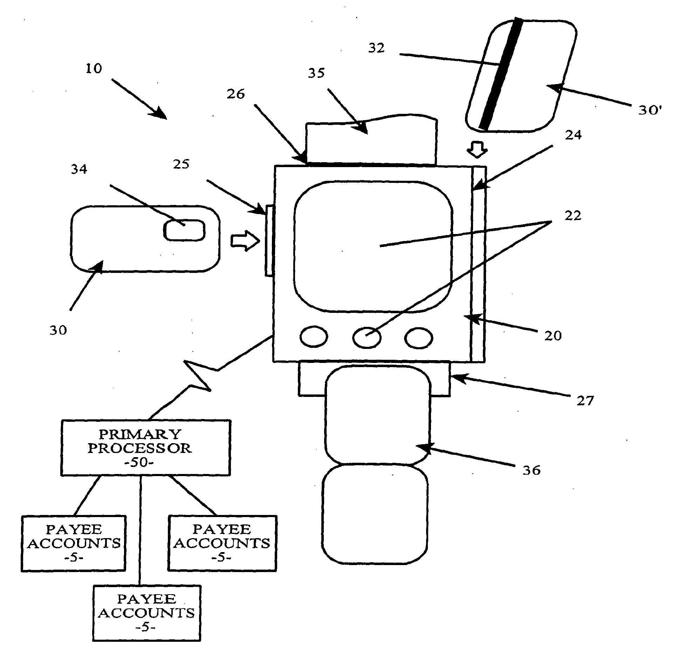

Figure 1 is a schematic representation of one embodiment of the payee account payment system of the present invention.

Like reference numerals refer to like parts throughout the drawing.

### DETAILED DESCRIPTION OF THE PREFERRED EMBODIMENT

Shown throughout the Figures the present invention is directed towards a payee account payment system, generally indicated as 10. In particular, the payee account payment system 10 is configured to be used by a user, such as any ordinary consumer that has at least two payee accounts in connection with which payments must be paid. These payee accounts may include any variety of accounts including loan payment accounts, credit accounts, utility accounts, etc., the user being required to make periodic payments in connection therewith in order to avoid defaulting on said accounts. Furthermore, the payee accounts may be directly associated with the payee account payment system 10 of the present invention, also being managed and operated by a controlling authority thereof, instead of and/or in addition to other independent payee accounts managed by third parties. As a result, the present system may effectively integrate any payee accounts held by users of the system, as well as specific accounts, such as a credit account, established by the controlling authority of the present system.

In the preferred, illustrated embodiment, the payee account payment system 10 includes a transaction terminal 20. The transaction terminal 20, which may be any of a variety of transaction terminals, including that describing U.S. patent application serial nos. 09/588,917 and 10/120,896, the contents of which are hereby incorporated by reference, is preferably structured for convenient use at any commercial sales location, such as in a convenience store, supermarket, drug store, gas station, post office or any other type of location when transactions for the purchase of goods and/or services are already being made. To this end, and as will be described in further detailed subsequently, the transaction terminal 20 may also be configured to process a conventional transaction, such as in connection with a user's purchase of products and/or services being offered by a particular merchant who is the operator of the transaction terminal 20.

Looking to the preferred, illustrated transaction terminal 20 it preferably includes an operator interface, generally 22. The operator interface 22 is structured to communicate information to at least an operator of the transaction terminal 20, which may be the user and/or an employ of a merchant or controlling authority. Moreover, the user interface 22 is preferably configured to receive information in connection with the user. To this end, in the illustrated embodiment the operator interface 22 may include a displays screen, which may also be configured to be a touch pad so as to receive operator inputs thereby as well as display information to an operator thereof, and/or may include a series of keypads/buttons so as to receive a variety of operator inputs. As a result, information and/or selections both to and from the user and/or operator can be provided at the transactional terminal 20 utilizing the operator interface 22. It is noted that the user may also be the operator in an automated environment.

The present payee account payment system 10 further includes at least two, and preferably a plurality of user accounts, each associated with a different, particular user. In particular, although a single user or small number of users may be included, in the preferred embodiment of the present inventions a large plurality of users are included and can benefit from the present payee account payment system 10. As a result, each of said users includes a corresponding user account associated therewith.

Moreover, it is recognized that the individual user accounts may be predefined, requiring a user to establish the account at an earlier time, and/or may be defined contemporaneously with a transaction made at the transaction terminal. In either instance, however, a user account identifier is preferably provided and is structured to identify a specific one of the user accounts. The user account preferably corresponds a user that is consummating a particular transaction at the transaction terminal 20. Looking to the user account identifier, it may include an alpha numeric user account number which is to be inputted at the transaction terminal, such as utilizing the operator interface 22, and may if desired include a corresponding security facilities associated therewith. The security facility associated with the user account may include a password, the presentation of qualifying identification information, and/or more advanced verification including biometric verification and the like. Also, the security facilities may be adapted to be entered at the transaction terminal by the user, and therefore any necessary readers or input devices can be associated therewith, and/or they may be separate from the transaction terminal 20, requiring an appropriate interface and/or operator validation.

Furthermore, as part of the preferred, illustrated embodiment, the present invention may also include an account card 30, 30' issued to a user in connection with one or more user accounts. The account card 30, 30' is structured to at least partially contain the user account identifier. In this regard, the account card 30, 30' may include the user account identifier printed thereon for manual entry, and/or may include a magnetic stripe 32 and/or an encoded chip 34 which contains all or a part of a user account identifier. For example, only a portion of the user account identifier may be provided on a particular card, the remainder of the user account identifier being a password and/or a remaining portion of a user account number, so as to preserve additional security, and/or a facility identifier to identify a particular transaction terminal 20 associated with the transaction. Furthermore, in order to effectively facilitate the communication of a card contained user account identifier to the transaction terminal 20 for receipt and verification, a smart card reader 25 and/or magnetic stripe reader 24 may be provided in connection with the transaction terminal 20, each structured to correspondingly receive an appropriate associated account card 30, 30' and thereby identify the user account identifier. Of course, it is also noted that the security authority may also be a sufficient account identifier in and of itself.

Utilizing the user account identifier, the transaction terminal 20 is structured to correspondingly identify a user account, that user account being associated with the one or more payee accounts that a particular user elects to have associated therewith. For example, a user may have a large number of payee accounts and may independently elect to have one, a plurality, or all of those individual payee accounts associated with their particular user account. Naturally, that association may include the identification of the payee accounts with information such as account numbers, payee name, payment mailing addresses and the like which will ultimately facilitate communication and/or payment of balances in connection with those payee accounts. Although the transaction terminal 20 and its own internal processor may include sufficient data and information so as to correspondingly identify a user account locally from the user account identifier, it may be preferred that a communicative link be established with a primary processor 50 for this purpose. In particular, the primary processor 50 may include information regarding one or more of the payee accounts 5 associated with a specific user account, and as a result communication by the transaction terminal 20 with the primary processor can provide for appropriate identification and verification of the user account in connection with a particular transaction, to be described.

In addition to receiving user account information, such as specifically the user account identifier, the transaction terminal 20 is also structured to receive and/or generate a payment authorization. This payment authorization may be provided as part of an independent transaction solely for the purpose of making a payment to a payee account and/or in connection with a separate transaction being made at the particular merchant, such as for the purchase of goods and/or services. Accordingly, the actual payment received that results in the payment authorization can be a cash, credit and/or debit card type payment, the transaction terminal 20 helping to facilitate those separate transactions as well, if desired.

Looking further to the preferred embodiment, once the payment authorization is made, it is preferably associated with at least one of the payee accounts that are associated with the identified user account. As a result, the primary processor 50, which as indicated is preferably communicatively associated with the transaction terminal 20, is responsive to the payment authorization and thereby directs payment to one or more selected payee account in accordance with that payment authorization. To this end, the payment authorization may include a payment request for a specific payment amount to a specific payee account, and/or the payment of specified amounts to one or more specific payee accounts. Indeed a substantial degree of flexibility is preferably achieved as a result of the user account including a number of payee accounts 5 associated therewith.

As a result, when using the present invention, a user, either manually and/or through the use of the user account card 30, 30', provides the user account identifier at the transaction terminal 20 such that their user account may be appropriately identified and verified. The user then makes an appropriate payment thereby defining the payment authorization. As indicated, however, this payment may include a cash payment to an automated attendant and/or an operator of the transaction terminal 20, whereby the operator of the transaction terminal 20 correspondingly inputs a specific payment authorization and any necessary security provisions, such as a password, acknowledging that a cash payment has been received. Alternatively, a credit and/or debit card type payment and/or any other type payment may be provided including bank transfer type payments as the payment authorization. Of course, in the case of a credit and/or debit card transaction, the card reader 24 may be utilized so as to appropriately process the credit and/or debit card payment and indeed, the transaction terminal 20, either through a separate connection and/or preferably via the primary processor 50, may effectively verify and authorize a specific transaction for a particular amount in the normal manner in which credit card and/or debit card accounts are processed. As a further alternative, the user account card 30' itself may function not only as a vehicle for providing the user account identifier, but may also be utilized as a conventional credit card both in connection with a transaction for the payment of various payee accounts and/or with a normal transaction for the purchase of goods and/or services at any location. Nevertheless, once a payment has been made through any appropriate means, the payment is preferably identified as being for a specific amount. Additionally, preferably through the use of the operator interface 22, the user is able to select one or more payee accounts 5 that are identified as associated with the specific user account. In this regard, information in the form of a display and/or read out of the available payee accounts 5 associated with the particularly user account is provided to the user, such as on the operator interface 22, so as to facilitate the user's selection and identification of appropriately associated payee accounts. Of course, if desired, a new payee account can also be established. Preferably utilizing the user interface 22, the user is able to select whether all or part of a payment amount should be applied to one or more corresponding payee accounts, and if appropriate, in some embodiments communicativity may be established with the payee account operators so as to see the balance associated with e particularly payee account.

The payment authorization, once generated, specifies amounts to be applied to one or more payee accounts of the user. A user of the present payee account payment system 10 is therefore able to effectively and conveniently make payments to one or a plurality of payee accounts without requiring specialized computer access and/or without requiring special payment means. Rather, they may use any conventional payment means which are normally accepted at a particular merchant so as to effectively make a payment in connection with one or more associated user accounts. Naturally, a fee may be charged either by a particular merchant and/or operator of the transaction terminal 20 and/or by a controlling authority which manages the payee account payment system 10 of the present invention, either from the user and/or from the managers of the individual payee accounts who are being assisted with prompt payment. Furthermore, because of the versatility of the transaction terminal 20 a specific merchant will have a substantial incentive to have such a transaction terminal 20 available for use by their customers, as it would not only provide the added service to customers of allowing the payment of these various payee accounts, but will also provide a facilitated means for accepting payments for their ordinary products and services to be offered. Additionally, small merchants will have the same ability to provide this service as do large merchants, thereby providing incentive for increased consumer traffic and added services.

Also, in order to effective provide a user with an appropriate record of a transaction that is being made, one or more printer assemblies 26, 27 may be provided. In particular, a conventional printer assembly 26 which is configured to print a paper receipt 35 may be provided, the receipt providing a user with a complete record of the transaction, and in some instances, if a signature can not be made via the operator interface 22, may be the source by which a signature may be taken, if required. As indicated, this receipt 35 may include a record of a particular transaction that is being made in connection with the operators of the transaction terminal 20 and/or may include a record of the payment that have been made to the one or more payee accounts 5, thereby providing the user with appropriate records and confirmation in case of error or malfunction. As an additional value, however, a secondary printer 27 may also be provided. In the preferred illustrated embodiment, the secondary printer 27 is preferably structured to generate and/or print a card type receipt 36. This card type receipt 36 may include a record of a particular transaction for more convenient and durable storage by a user and/or may provide other value added services, such as coupons and/or promotional materials that provide a further incentive to the use of the system. Of course is recognized that coupons and/or promotional materials may be placed on the traditional paper receipt 35, however, it may be preferred that a card stock type material may be provided for receipt of such promotional and/or value added materials, as they may not be used immediately and should be more durable. Moreover, it is recognized that a transaction that can be achieved utilizing the transaction terminal 20 may include the purchase of an authorization code to be provided to the user, and which provides the user access to additional materials. For example, the authorization include code may be a prepaid telephony access code which can be use at a later point in time for the placing of local and/or long distance telephone calls. Accordingly, the transaction terminal 20, in addition to providing a convenient means of making payments to various payee accounts can also provide users with additional value added services, such as issuing authorization codes for pre-paid telephony. Furthermore, all such additional services promote consumer traffic and consumer activity at a merchant, which ultimately benefits the operator of the transaction terminal 20 more than can be achieved with a normal credit card processing device, both directly through compensation received in connection with the value added services and indirectly in connection with facilitating-transactions for their own goods and services being offered.

Although it is recognized that in a preferred embodiment an operator assisted transaction terminal scheme may be preferred, an automated transaction terminal 20 may also be provided in certain circumstances, with appropriate security measures being provided so as to prevent fraud. In such an embodiment, the user will also be the operator of the terminal. Nevertheless, however, as a primary function of the payee account payment system 10 of the present invention is to make payments to various user accounts, an effective record of transactions can be made and it would rather difficult for fraudulent transactions to be achieved to actually harm an owner of a specific user account.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims and their legal equivalents.

Now that the invention has been described,

## Claims

1. To be used by a user having at least two payee accounts in connection with which payments must be made, a payee account payment system comprising:
a) a transaction terminal, said transaction terminal including an operator interface structured to communicate information at least to an operator and to receive information in connection with the user;
b) a plurality of user accounts each associated with a particular user;
c) a user account identifier structured to identify a specific one of said user accounts;
d) said transaction terminal structured to receive said user account identifier and to correspondingly identify said user account;
e) said user account associated with said payee accounts;
f) said transaction terminal structured to receive a payment authorization in connection with at least one of said payee accounts associated with said identified user account; and
g) a primary processor communicatively associated with said transaction terminal and responsive to said payment authorization, said primary processor further structured to direct payment to the payee account in accordance with said payment authorization.

2. A payee account payment system as recited in claim 1 wherein said user interface includes a visual display structured to display information to the operator.

3. A payee account payment system as recited in claim 2 wherein said visual display includes a touch screen structured to receive an operator input.

4. A payee account payment system as recited in claim 2 wherein said user interface includes a key pad.

5. A payee account payment system as recited in claim 2 wherein said transaction terminal is structured to display a list of available ones of the payee accounts associated with said identified user account on said user interface.

6. A payee account payment system as recited in claim 1 further comprising an account card, said account card structured to at least partially contain said user account identifier.

7. A payee account payment system as recited in claim 6 wherein said account card is further structured to act as a credit card.

8. A payee account payment system as recited in claim 6 wherein said user interface includes a card reader structured to receive said user account identifier from said account card.

9. A payee account payment system as recited in claim 8 wherein said card reader includes a magnetic stripe reader.

10. A payee account payment system as recited in claim 8 wherein said card reader includes a data chip reader.

11. A payee account payment system as recited in claim 6 wherein said user interface includes a card encoder structured to encode a record of transactions onto said account card.

12. A payee account payment system as recited in claim 1 wherein said transaction terminal is structured to process credit card transactions, and said payment authorization is generated at least partially in accordance with said credit card transaction.

13. A payee account payment system as recited in claim 12 wherein said transaction terminal is structured to allocate a portion of the funds associated with said credit card transaction to a purchase and another portion as said payment authorization.

14. A payee account payment system as recited in claim 1 wherein said transaction terminal is structured to process debit card transactions, and said payment authorization is generated at least partially in accordance with said credit card transaction.

15. A payee account payment system as recited in claim 14 wherein said transaction terminal is structured to allocate a portion of the funds associated with said debit card transaction to a purchase and another portion as said payment authorization.

16. A payee account payment system as recited in claim 1 wherein said payment authorization is generated in response to an operator input in connection with an external payment to said operator.

17. A payee account payment system as recited in claim 16 wherein said transaction terminal is structured to allocate a portion of the funds associated with said external payment to a purchase and another portion as said payment authorization.

18. A payee account payment system as recited in claim 1 wherein said transaction terminal is structured to allocate said payment authorization between a plurality of said payee accounts.

19. A payee account payment system as recited in claim 1 wherein said primary processor is structured to direct a payment to at least one unaffiliated payee account in response to said payment authorization.

20. A payee account payment system as recited in claim 1 wherein said primary processor is structured to direct a payment to a plurality of payee accounts in response to said payment authorization.

21. A payee account payment system as recited in claim 1 wherein said transaction terminal includes at least one printer assembly.

22. A payee account payment system as recited in claim 21 wherein said printer assembly is structured to print a receipt reflecting payments to the payee accounts.

23. A payee account payment system as recited in claim 22 wherein said receipt includes printed promotional material thereon.

24. A payee account payment system as recited in claim 21 wherein said printer assembly is structured to print a receipt associated with a transaction completed on said transaction terminal.

25. A payee account payment system as recited in claim 1 wherein said transaction terminal is structured to generate an authorization code to said user, said authorization code structured to provide the user access to external materials.

26. A payee account payment system as recited in claim 25 wherein said authorization code includes a pre-paid telephony access code.
